# FASCICULE DE BREVET EUROPEEN

(11) **EP 1 002 476 B1**
(45) Date de publication et mention de la délivrance du brevet: **06.05.2004**
(21) Numéro de dépôt: 99402833.0
(22) Date de dépôt: 16.11.1999
(51) Int. Cl.: A44B 18/00, B29C 33/16, B29C 33/14

(54) **Bande stratifiée auto-agrippante**
Laminierter Haftbandverschluss
Laminated "touch and close" tape fastener

(30) Priorité: 19.11.1998 FR 9814556
(43) Date de publication de la demande: 24.05.2000
(73) Titulaire: Aplix Société Anonyme, 75008 Paris (FR)
(72) Inventeur: Billarant, Fabrice, 44000 Nantes (FR)
(74) Mandataire: Eidelsberg, Olivier Nathan

(56) Documents cités:
- EP-A- 0 168 241
- WO-A-96/25064
- DE-A- 3 903 847
- FR-A- 2 412 736
- FR-A- 2 423 666
- US-A- 5 110 649

## Description

La présente invention concerne une bande stratifiée comportant une nappe à éléments d'accrochage, notamment du type auto-agrippants, un objet moulé comportant une bande de ce genre ainsi qu'un procédé de fabrication d'un objet moulé de ce genre.

Pour fixer une bande de ce genre à un objet moulé, par exemple un coussin en matière plastique alvéolaire ou en matière en mousse de siège de voiture, aéronautique ou autre, lors du moulage de celui-ci, on dispose la bande sur la surface intérieure du moule, généralement au fond, la face de la nappe auto-agrippante portant les éléments auto-agrippants étant tournée vers la paroi intérieure du moule. On coule la mousse dans le moule. La mousse liquide vient au contact de l'autre face de la nappe. Une fois la mousse durcie, on retire l'objet du moule. L'objet comporte alors à sa surface des éléments auto-agrippants qui permettent la fixation de tissus ou analogue à l'objet pour le recouvrir. Pendant cette opération de moulage et de fixation d'éléments auto-agrippants, il convient de bien protéger les éléments auto-agrippants de tout contact avec la mousse liquide ou pâteuse, afin que leur capacité d'auto-agrippage ne soit pas altérée.

Pour protéger ces éléments auto-agrippants, il est déjà connu de prévoir une cavité constituée de deux nervures qui font saillie de la face intérieure du moule et entre lesquelles est reçue la bande. Celle-ci est en un matériau suffisamment souple pour pouvoir être insérée en force dans la cavité et créer ainsi un espace étanche délimité par les nervures, le fond du moule et la bande légèrement fléchie et portant contre les nervures. Les éléments auto-agrippants sont ainsi, en théorie, protégés de l'infiltration de mousse liquide lors de la coulée. Cette façon de faire, d'une part, prend du temps, car il faut que l'opérateur insère chaque fois en force la bande dans sa cavité, et, d'autre part, s'est avérée, dans la pratique, peu efficace pour empêcher la mousse liquide de pénétrer dans l'espace étanche. On se référera par exemple au brevet français n° 7804001 au nom de la demanderesse.

Pour améliorer cette opération de fixation, on a déjà pensé à coller un feuillard métallique sur une des faces de la nappe et à magnétiser le fond de la cavité. Ainsi, par effet d'aimantation, la bande reste bien orientée avec ses éléments auto-agrippants du côté de la surface intérieure du moule et ne se retourne plus, notamment sous l'effet de la coulée. Cependant, la mousse liquide a toujours tendance à s'infiltrer par les interstices de la liaison bande-nervures qui ne sont pas parfaitement étanches.

Dans le brevet français n° 7804001, on prévoit également une couche de mousse à la place du feuillard métallique, la fonction étant la même que celle du feuillard, à savoir maintenir en place la bande en l'empêchant de se retourner. Cependant, dans ce cas également, le même inconvénient subsiste , à savoir la mousse liquide tend à s'infiltrer.

Pour surmonter cet inconvénient, on a également prévu de disposer une pellicule de protection sur les éléments auto-agrippants qui sont, d'une part, bien maintenus vers le fond de la cavité grâce au feuillard métallique, et, d'autre part, protégés de la mousse liquide par la pellicule de protection. Cependant, ce type de bande limite le rendement de production des objets, car, d'une part, les bandes sont plus coûteuses et plus longues à fabriquer (ajouts d'une pellicule de protection), et, d'autre part, il faut ensuite retirer les pellicules avant de fixer par exemple du tissu à l'objet.

On connaît également du document US-A-5.110.649 une bande stratifiée, comportant une nappe auto-agrippante comportant des éléments d'accrochage, une couche en matière plastique mousse et une couche métallique. Cependant, dans cette bande stratifiée de l'art antérieur, la feuille métallique est disposée au-dessus de la couche en matière plastique mousse et s'intègre ainsi entre la mousse coulée et cette couche de matière plastique mousse. Il s'ensuit la nécessité de prévoir des moyens pour réaliser la solidarisation de la mousse coulée et de la couche de matière plastique mousse, sous la forme d'un treillis ouvert, ce qui rend la bande coûteuse et compliquée à fabriquer.

L'invention vise une bande de ce genre qui, tout en garantissant une bonne orientation vers le bas des éléments d'accrochage et une bonne protection de ceux-ci vis-à-vis de la mousse liquide, est plus simple à fabriquer et moins coûteuse que les bandes de l'art antérieur.

Le document WO 96/25064 décrit une bande stratifiée. Il n'y a pas de couche métallique, du métal étant simplement mélangé à la mousse de la couche de mousse. La teneur en métal est trop faible et il est nécessaire de faire affleurer la bande avec les nervures de la cavité du moule pour obtenir une étanchéité suffisante. L'installation de cette bande nécessite donc une certaine précision et donc du temps et de la main-d'oeuvre.

Le document EP 0168 241 décrit une bande comme définie au préambule de la revendication 1. Il est nécessaire de prévoir un film protecteur des crochets lorsque l'on verse la mousse dans le moule.

Suivant l'invention, un ensemble est tel que revendiqué à la revendication 1.

Un objet moulé et un procédé suivant l'invention sont indiqués aux sous-revendications

Ainsi, en prévoyant sur la face du ruban auto-agrippant qui ne porte pas les éléments d'accrochage, en succession, une couche métallique et une couche de mousse compatible avec la mousse destinée à être coulée sur la bande, on obtient, d'une part, toujours une bonne orientation des éléments d'accrochage vers le fond de la cavité du moule (l'aimantation empêchant la bande de se retourner sous l'effet des forces créées par la coulée de la mousse), et, d'autre part, une bonne protection de ces éléments d'accrochage, les bords de la couche de mousse venant, par pression de la mousse coulée, s'insérer dans les interstices entre la bande et les nervures et empêchant ainsi la mousse liquide de pénétrer sous la bande et l'empêchant ainsi de souiller les éléments d'accrochage. En outre, la fabrication est simplifiée.

L'invention vise également un objet moulé comportant une bande suivant l'invention et un procédé de fabrication d'un objet moulé comportant les étapes qui consistent à :
- poser une bande suivant l'invention sur une surface intérieure aimantée d'un moule entre deux nervures longitudinales issues du moule, en laissant un interstice entre les nervures et les bords de la bande,
- couler du produit de moulage, sous forme d'une première matière plastique mousse, dans le moule et la laisser se solidifier à la matière plastique mousse du ruban en mousse, et ;
- retirer l'objet du moule.

Le ruban auto-agrippant a une épaisseur comprise entre 0,5 mm et 3 mm, de préférence entre 1 et 2 mm. La couche métallique a une épaisseur comprise entre 0,5 mm et 2,5 mm, de préférence entre 1 mm et 2 mm. La couche de mousse a une épaisseur de 1 à 8 mm, de préférence 3 à 5 mm.

La couche de mousse peut-être un polyéther, notamment du polyuréthane.

La couche de métal peut comporter du fer, ou tout autre métal ou alliage, susceptible d'être attiré par un aimant.

Un mode de réalisation de l'invention, donné uniquement à titre d'exemple, est décrit maintenant en se référant aux dessins annexés dans lesquels :
la figure 1 est une vue en perspective d'une partie d'un moule suivant l'invention,
la figure 2 est une vue en coupe du moule de la figure 1, dans lequel est inséré une bande suivant l'invention,
la figure 3 est une vue en coupe d'une bande suivant l'invention,
la figure 4 représente l'objet moulé fini, portant la bande et recevant un revêtement, et
la figure 5 est une vue en coupe du moule de la figure 2, dans lequel est inséré une bande suivant un autre mode de réalisation de l'invention.

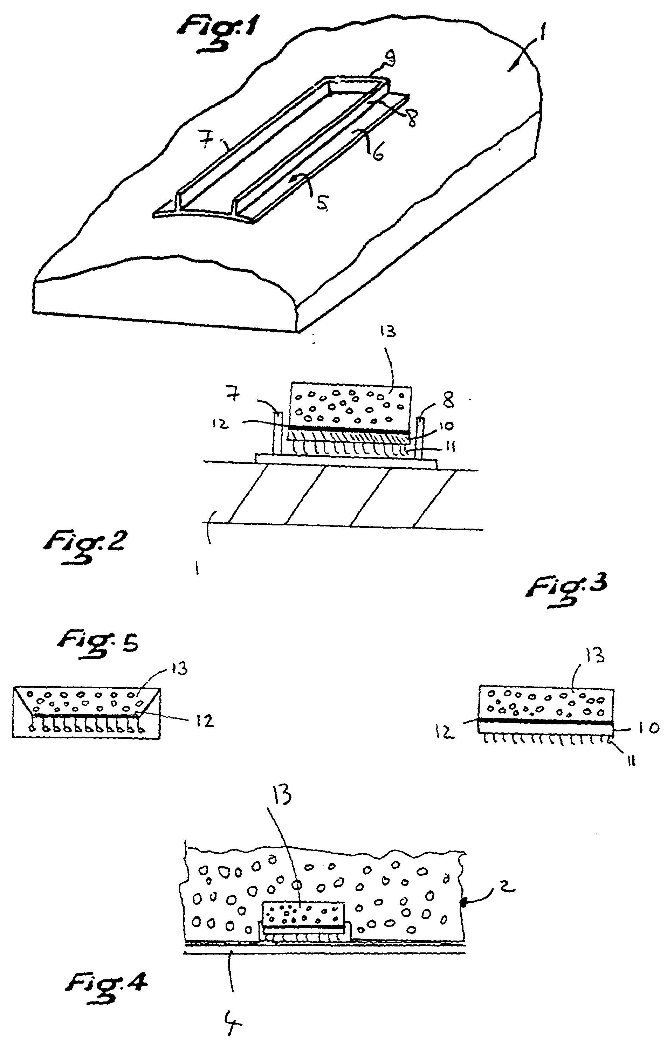

A la figure 1 est représenté le fond d'un moule 1, par exemple en aluminium, pour la fabrication d'un objet 2 moulé, ici un coussin en mousse de polyuréthane.

On souhaite faire comporter au coussin 2, en des endroits définis à l'avance, des éléments d'accrochage 11, par exemple en forme de crochets auto-agrippants, destinés à retenir une housse 4.

Le fond du moule 1 comporte, sur sa face intérieure, une pièce 5 profilée constituée d'une semelle 6 de fixation sur le moule, de deux nervures 7, 8 longitudinales et de nervures 9 transversales (une seule étant représentée au dessin).

A la figure 3, il est représentée une première forme de réalisation d'une bande suivant l'invention.

La bande est constituée d'un ruban 10 en matière souple, par exemple en polyamide ou polyester, comportant sur une de ses faces des éléments d'accrochage 11, en forme de crochets ou champignons. Une couche 12 métallique est fixée par collage sur l'autre face du ruban 10. Sur cette couche 12, il est fixé par collage une couche 13 de mousse. La mousse de la couche 13 de mousse est compatible avec la mousse de coulée du coussin 2 moulé.

La largeur du ruban 10 ou de la couche 13 de mousse (selon le mode de réalisation de la figure 3 ou de la figure 4) est sensiblement égale à la distance séparant les deux nervures longitudinales 7, 8, de préférence légèrement inférieure à celle-ci, par exemple de un demi millimètre à 5 millimètres, de sorte que la bande puisse être insérée facilement entre les nervures 7, 8, sans avoir à l'insérer par force.

Le procédé pour fabriquer la bande est le suivant. Une nappe de tissus en polypropylène comportant des éléments auto-agrippants sur l'une de ses faces est enduite sur son autre face d'une couche de métallisation comportant un liant. Puis, par laminage ou foamage (système à la flamme), on applique une couche de mousse sur la couche métallique. Ensuite, on découpe la nappe en des formes quelconques telles que celles souhaitées pour correspondre à la forme de la cavité, notamment en forme de ruban.

Le procédé pour fabriquer le coussin 2 est le suivant.

La partie du moule 1 est aimanté, notamment sur sa surface intérieure à l'endroit où se trouve la cavité 5.

La bande est disposée, par l'opérateur ou par un bras de robot, entre les nervures 7, 8 longitudinales de la cavité 5, les crochets 11 étant dirigés vers le bas en direction de la surface intérieure du moule 1. On laisse un petit interstice entre les nervures et la bande, par exemple de largeur environ de 0,5 mm à 5 mm. Une fois la bande en position, on coule le produit de moulage liquide dans le moule. La couche 13 de mousse, sous l'effet de la pression du produit de moulage liquide tend à se déformer et ses bords longitudinaux 14, 15 s'écartent vers l'extérieur de la bande, sous l'effet de l'expansion de la mousse en phase pâteuse, et viennent fermer, de manière étanche vis-à-vis du produit de moulage liquide, les interstices entre les nervures 7, 8 et la bande, pour ainsi protéger les crochets 11.

Une fois le produit de moulage solidifié et lié à la couche 3 de mousse, le coussin 2 peut être retiré du moule 1, les crochets 11 étant ainsi mis à nu et pouvant servir à l'accrochage de la housse 4.

Le produit de moulage est un polyéther, notamment le polyuréthane, de même densité que celui utilisé pour la mousse de la bande ou de densité différente. Il peut également être tout produit de moulage, à condition d'être compatible avec la mousse de la bande, c'est-à-dire que les deux produits se fixent l'un à l'autre, lors de la solidification du produit de moulage. La couche 12 métallique est formée en enduisant, sur la face ne portant pas de crochets du ruban 10, une préparation de colle polyuréthane nitrile additionnée de poudre de fer, la proportion du fer étant de 75% en poids au moins et l'épaisseur de 1 mm.

La couche de mousse, d'une épaisseur de 4 millimètres, est de nature polyéther, par exemple du polyuréthane, ou en un autre matériau thermodurcissable.

A la figure 5, la section transversale de la couche 13 de mousse est de forme tronconique, la largeur supérieure de la couche étant supérieure à la largeur inférieure de la couche, en contact avec la couche 12 métallique et de même largeur. Grâce à cette disposition en biseau de la couche de mousse, on peut utiliser la bande même dans le cas de logements qui, sinon, seraient trop grands. Il y a ainsi moins d'adaptation mutuelle du logement et de la largeur de la bande à effectuer et on peut ainsi utiliser des logements constants pour différentes largeurs de bande.

## Revendications

1. Bande stratifiée, comportant une nappe (10) auto-agrippante comportant des éléments d'accrochage, une couche (13) en une matière plastique mousse et une couche (12) métallique, apte à être attirée par un aimant, interposée entre la couche en matière plastique et la nappe auto-agrippante, **caractérisé en ce que** la couche de mousse, la couche (12) métallique et la nappe auto-agrippante ont la même largeur.

2. Objet moulé comprenant un corps en une première matière plastique, et une bande stratifiée suivant la revendication 1 étant incorporée au corps en y étant liée par la couche (13) en matière plastique mousse qui est compatible avec la première matière plastique, les éléments d'accrochage apparaissant à la surface extérieure de l'objet.

3. Procédé de fabrication d'un objet moulé suivant la revendication 2, **caractérisé en ce qu'**il comporte les étapes qui consistent à :
- poser une bande stratifiée suivant la revendication 1, sur une surface intérieure aimantée d'un moule (1) entre deux nervures (7, 8) longitudinales issues du moule (1 ), en laissant un interstice entre les nervures et les bords de la bande,
- couler du produit de moulage, sous forme d'une première matière plastique mousse, dans le moule (1) et la laisser se solidifier à la matière plastique mousse du ruban (13) en mousse, et ;
- retirer l'objet du moule.

4. Procédé suivant la revendication 3, **caractérisé en ce que** les interstices ont une largeur comprise entre 0,5 mm et 5 mm.

## Claims

1. A laminated tape comprising :
a self-gripping sheet (10) having hook-fastening elements thereon ;
a layer ( 13) of plastic foam ; and
a layer (12) of magnetically-attractable metallic material positioned between the layer of plastic foam and the self-gripping sheet, **characterized in that** the foam layer, the layer (12) of metallic material and the self gripping sheet have the same width.

2. A moulded article comprising a body made of a first plastic and a laminated tape according to claim 1 being incorporated in the body by being bonded thereto by the layer (13) of plastic foam which is compatible with the first plastic material, the hook-fastening elements extending from an outside surface of the article.

3. A method for making a moulded article as defined in claim 2, **characterized in that** it comprises the steps of :
- arranging a tape in accordance with claim 1, on a magnetized inside surface of a mould (1) between two longitudinal ribs (7, 8) extending from the mould (1) while leaving an interstice between the ribs and the edges of the tape ;
- pouring a moulding product in the form of a first plastic foam material into the mould (1) and allowing it to solidify into the plastic foam of the tape (13) and
- withdrawing the moulded article from the mould.

4. A method as described in claim 3, **characterized in that** the interstice has a width of between 0.5 mm and 5 mm.

## Patentansprüche

1. Geschichtetes Band, das eine selbsthaftende Schicht (10) mit Einhakelementen, eine Schicht (13) aus einem Schaumkunststoff und eine metallische Schicht (12), die von einem Magneten angezogen werden kann und zwischen die Kunststoffschicht und die selbsthaftende Schicht eingefügt ist, umfasst, **dadurch gekennzeichnet, dass** die Schaumstoffschicht, die metallische Schicht (12) und die selbsthaftende Schicht die gleiche Breite aufweisen.

2. Gegossener Gegenstand mit einem Körper aus einem ersten Kunststoff und einem geschichteten Band gemäß dem Anspruch 1, das dem Körper eingegliedert ist und mit diesem durch die Schicht 13 aus Schaumkunststoff, der mit dem ersten Kunststoff kompatibel ist, verbunden ist, wobei die Einhakelemente an der Außenfläche des Gegenstands auftreten.

3. Herstellungsverfahren eines gegossenen Gegenstands nach Anspruch 2, **dadurch gekennzeichnet, dass** es die Schritte umfasst, die bestehen im:
- Aufbringen eines geschichteten Bandes gemäß Anspruch 1 auf eine magnetisierte Innenfläche einer Gießform (1) zwischen zwei aus der Gießform (1) vorstehenden Longitudinalrippen (7,8), wobei ein Zwischenraum zwischen den Rippen und den Rändern des Bandes gelassen wird,
- Gießen des Gießerzeugnisses in Form einer ersten Schaumkunststoffschicht in der Gießform (1) und Verfestigenlassen dieser an dem Schaumkunststoff des Schaumstoffbandes (13), und
- Entnehmen des Gegenstandes aus der Form.

4. Verfahren nach Anspruch 3, **dadurch gekennzeichnet, dass** die Zwischenräume eine zwischen 0,5 mm und 5 mm liegende Breite aufweisen.
